# FASCICULE DE BREVET EUROPEEN

(11) **EP 3 459 273 B1**
(45) Date de publication et mention de la délivrance du brevet: **22.01.2020**
(21) Numéro de dépôt: 17727660.7
(22) Date de dépôt: 12.05.2017
(51) Int. Cl.: H04W 76/10, H04W 8/00

(54) **PROCÉDÉ DE CONNEXION AUTOMATIQUE D'UN DISPOSITIF MAÎTRE AVEC UN DISPOSITIF ESCLAVE**
VERFAHREN ZUR AUTOMATISCHEN VERBINDUNG EINER MASTER-VORRICHTUNG MIT EINER SLAVE-VORRICHTUNG
METHOD FOR AUTOMATIC CONNECTION OF A MASTER DEVICE TO A SLAVE DEVICE

(30) Priorité: 17.05.2016 FR 1654380
(43) Date de publication de la demande: 27.03.2019
(73) Titulaire: Orange, 75015 Paris (FR)
(72) Inventeur: MARCHAND, Hervé, 35770 VERN SUR SEICHE (FR); FONTAINE, Fabrice, 35850 GEVEZE (FR)
(86) Numéro de dépôt international: PCT/FR2017/051155
(87) Numéro de publication internationale: WO 2017/198934

(56) Documents cités:
- EP-A1- 2 634 999
- US-A1- 2015 296 020

## Description

### Domaine technique

L'invention se rapporte au domaine général des télécommunications.

L'invention se rapporte plus particulièrement à un procédé de connexion d'un dispositif maître avec un dispositif esclave, le dispositif esclave étant choisi dans une liste de dispositifs esclaves aptes à communiquer avec le dispositif maître.

L'invention peut être utilisée dans le contexte d'un réseau de communication Bluetooth ; cependant, l'invention ne se limite pas à ce type de réseau mais s'étend à tout système informatique incluant un dispositif maître et des dispositifs esclaves ; système dans lequel le dispositif maître est voué à communiquer avec tout ou partie des dispositifs esclaves, et en particulier à gérer la connexion avec les dispositifs esclaves.

### Etat de la technique

Aujourd'hui, la plupart des dispositifs de communication mobile, tels que les smartphones, sont dotés de moyens de communication sans fil notamment du type Bluetooth. Grâce à ce type de moyens de communication, les dispositifs mobiles peuvent communiquer avec d'autres dispositifs périphériques et décharger, au moins en partie, à ces autres dispositifs une tâche donnée comme par exemple une restitution sonore d'un contenu.

Rappelons que le standard Bluetooth est basé sur un mode de fonctionnement maître/esclave. Dans ce contexte, le smartphone joue le rôle du dispositif maître et les dispositifs de restitution jouent le rôle de dispositifs esclaves.

Aussi, afin de limiter la consommation énergétique des dispositifs esclaves, un réseau sans fil basse consommation a été créé pour la communication entre le dispositif maître et les dispositifs esclaves. Il s'agit par exemple d'un réseau d'accès radio de technologie BLE, pour « Bluetooth Low Energy ».

Rappelons que le protocole mis en œuvre dans un réseau d'accès BLE fonctionne en 2 phases :
- une phase d'annonce où un dispositif BLE de type « périphérique », par exemple un objet connecté, annonce régulièrement sa présence sur le réseau d'accès BLE par l'intermédiaire d'une trame « LE Advertising Report » qui comprend notamment son adresse MAC BLE, son nom et un niveau de puissance d'un signal radio reçu RSSI (pour « Received Signal Strength Indication ») ;
- une phase de connexion GATT (pour « Generic Attribute Profile ») où un dispositif BLE de type « central » se connecte au dispositif périphérique pour collecter des informations plus détaillées telles que le nom du fabricant, le niveau de la batterie, etc.

Rappelons aussi que la technologie d'accès BLE est définie par un groupe de normalisation Bluetooth SIG sous la forme d'un ensemble de documents, nommé « Bluetooth Core Specification 4.1 ».

Suite à la phase d'annonce, les dispositifs esclaves sont détectés par le dispositif BLE « central » ou maître. Suite à la détection, un utilisateur peut sélectionner un dispositif esclave. A cette fin, l'utilisateur visualise les dispositifs esclaves par exemple via un écran présent sur le dispositif maître ; il sélectionne ensuite manuellement celui qu'il souhaite utiliser en sélectionnant, au niveau du dispositif maître, le nom du dispositif esclave souhaité dans une liste de dispositifs esclaves ; la sélection peut se faire de différentes manières par exemple via un écran tactile présent sur le dispositif maître.

Un problème, lors de la sélection, est qu'il est quasiment impossible, dans la liste proposée, d'associer un nom de dispositif esclave avec un dispositif esclave de la liste visée ci-dessus. En effet, le nom d'un dispositif esclave est généralement inscrit en usine dans une mémoire non volatile du dispositif ; ce nom n'est généralement pas très explicite et peut être le même pour deux appareils distincts. De plus, le nom n'est généralement pas modifiable. En conséquence, dans les faits, au moins à la première utilisation, l'utilisateur sélectionne au hasard un des dispositifs esclaves en espérant que ce dernier soit le dispositif esclave souhaité. Dans la négative, il retente l'opération jusqu'à sélectionner le bon dispositif esclave. Cette opération de sélection peut devenir insupportable pour un utilisateur. EP 2 634 999 et US 2015/296020 décrivent des systèmes de communication peer to peer, soit WiFi Directs, soit en Bluetooth, qui permettent à un terminal maître de sélectionner un terminal esclave en fonction des profils reçus des terminaux esclave.

L'invention vient améliorer la situation. L'invention est décrite dans les revendications.

A ce titre, selon un premier aspect fonctionnel, l'invention a pour objet un procédé de connexion tel que défini dans la revendication 1.

Selon l'invention, le dispositif maître sélectionne un dispositif esclave en fonction des données reçues depuis les dispositifs esclaves. On verra dans la suite, relativement à un deuxième aspect fonctionnel de l'invention, qu'une sélection d'un dispositif esclave entraîne une mise à jour d'une donnée, dite donnée de sélection, sur le dispositif esclave. Cette donnée de sélection mise à jour sera reçue ensuite par le dispositif maître ; les autres données de sélection non mises à jour provenant des autres dispositifs esclaves sont aussi reçues par le dispositif maître; Le dispositif maître compare ensuite les données de sélection reçues, identifie la donnée mise à jour, et se connecte au dispositif esclave associé.

Le dispositif maître va donc se connecter au bon dispositif esclave à la première tentative de connexion, et ce sans qu'un utilisateur ait besoin de sélectionner un nom de dispositif esclave au niveau du dispositif maître, comme dans l'art antérieur. Il en résulte pour l'utilisateur un gain en temps considérable.

Selon un mode de mise en œuvre particulier de l'invention, les données de sélection sont des données temporelles fournies par des compteurs temporels respectifs aptes à comptabiliser des durées d'utilisation respectives des dispositifs esclaves, les données temporelles étant aptes à être réinitialisées ; dans ce mode, l'étape de comparaison porte sur ces données temporelles. La mise à jour d'une donnée temporelle a pour effet de rendre la valeur de cette donnée temporelle distinctive par rapport aux autres.

Selon une première variante de ce mode de mise en œuvre, si l'étape de connexion concerne un seul dispositif esclave, la connexion s'effectue avec le dispositif esclave dont la donnée temporelle reçue est la plus petite. Dans cette configuration, la donnée temporelle est une durée d'utilisation. La mise à jour a pour effet de mettre à zéro (0 min) la donnée temporelle associée au dispositif sélectionné. Il en résulte, pour le dispositif esclave sélectionné, une valeur de donnée temporelle, plus petite que les autres ; cette valeur distinctive permet au dispositif maître de choisir le dispositif esclave associé à cette valeur.

Selon une deuxième variante de ce mode de mise en œuvre, si l'étape de connexion concerne plusieurs dispositifs esclaves, la connexion s'effectue avec les dispositifs esclaves dont les données temporelles sont incluses dans une plage temporelle donnée (par exemple [0mn, 1mn]). Dans cette configuration, plusieurs dispositifs esclaves peuvent être choisis par le dispositif maître. L'intervalle est choisi de telle sorte qu'il est peu probable qu'une donnée temporelle non mise à jour se trouve dans cet intervalle et qu'au contraire une donnée temporelle mise à jour se trouve dans cet intervalle. Par exemple, 1 minute (1 min) peut être suffisant pour sélectionner trois dispositifs esclaves. L'intervalle peut donc être [0 min ,1 min]. De cette manière, si n dispositifs esclaves sont sélectionnés, le dispositif maître choisira les dispositifs esclaves disponibles ayant une valeur de donnée de sélection comprise dans l'intervalle [0 min ,1 min].

Selon une troisième variante de ce mode de mise en œuvre, si l'étape de connexion concerne plusieurs dispositifs esclaves, et si un nombre de connexions est préalablement défini ; la connexion s'effectue dans ce cas avec un nombre de dispositifs esclaves égal au nombre défini et ayant les plus petites données temporelles. Cette variante évite d'utiliser une plage temporelle, par exemple [0 min,1 min], telle que décrite dans la deuxième variante. Le nombre de dispositifs esclaves à choisir en vue d'une connexion est connu au niveau du dispositif maître. Dans ce cas, si le nombre est N, le dispositif maître choisi les N plus petites durées.

Selon une quatrième variante de ce mode de mise en œuvre, une réinitialisation entraîne une mise à zéro de la donnée temporelle ; dans cette configuration, la valeur de la donnée temporelle résultant de la réinitialisation est maintenue à la même valeur pendant une durée prédéfinie ; par exemple si suite à la réinitialisation la valeur est 0 min, cette valeur est maintenue à 0 min sur une durée prédéfinie. Cette quatrième variante est intéressante car elle évite à la fois l'utilisation d'une plage temporelle telle que décrite dans la deuxième variante ci-dessus et la définition d'un nombre de dispositifs esclaves comme dans la troisième variante. Dans ce quatrième mode, comme on l'a vu, les données réinitialisées à zéro minute restent à zéro minute sur une plage temporelle donnée ; cette plage est choisie judicieusement pour correspondre approximativement au temps nécessaire pour réaliser la sélection des dispositifs esclaves. Ainsi, si trois dispositifs esclaves sont sélectionnés, les compteurs sont réinitialisés à zéro; la nouvelle valeur de la donnée temporelle (0 min) est maintenue à cette valeur par exemple 0.15 minutes ; le dispositif maître reçoit alors trois données temporelles avec une valeur nulle et peut choisir les dispositifs esclaves en question en vue d'une connexion automatique avec ces dispositifs esclaves.

Selon un deuxième aspect fonctionnel, l'invention a trait à un procédé de connexion d'un dispositif, dit dispositif esclave, tel que défini dans la revendication 6.

Selon un mode de mise en œuvre particulier de l'invention, la donnée est une donnée temporelle fournie par un compteur temporel apte à comptabiliser une durée d'utilisation du dispositif esclave, et dans lequel la mise à jour correspond à une réinitialisation de la donnée temporelle.

Selon un premier aspect matériel, l'invention se rapporte à un dispositif, dit dispositif maître, tel que défini dans la revendication 8.Selon un autre aspect matériel, l'invention se rapporte à un dispositif, dit dispositif esclave, tel que défini dans la revendication 6.

Selon un autre aspect matériel, l'invention se rapporte à un programme d'ordinateur apte à être mis en œuvre sur un dispositif maître tel que défini ci-dessus, le programme comprenant des instructions de code qui, lorsqu'il est exécuté par un processeur, réalise les étapes du procédé définies ci-dessus relativement au dispositif maître.

Selon un autre aspect matériel, l'invention se rapporte à un programme d'ordinateur apte à être mis en œuvre sur un dispositif esclave tel que défini ci-dessus, le programme comprenant des instructions de code qui, lorsqu'il est exécuté par un processeur, réalise les étapes du procédé définies ci-dessus relativement au dispositif esclave.

Selon un autre aspect matériel, l'invention se rapporte à un support de données sur lequel a été mémorisée un programme tel que défini ci-dessus relativement au dispositif maître.

Selon un autre aspect matériel, l'invention se rapporte à un support de données sur lequel a été mémorisée un programme tel que défini ci-dessus relativement au dispositif esclave.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
La figure 2 représente un dispositif maître selon un mode particulier de réalisation.
La figure 3 représente un dispositif esclave selon un mode particulier de réalisation.
La figure 4 illustre des étapes d'un procédé de connexion d'un dispositif maître avec un dispositif esclave selon un mode particulier de réalisation.

### Description détaillée d'un exemple de réalisation illustrant l'invention

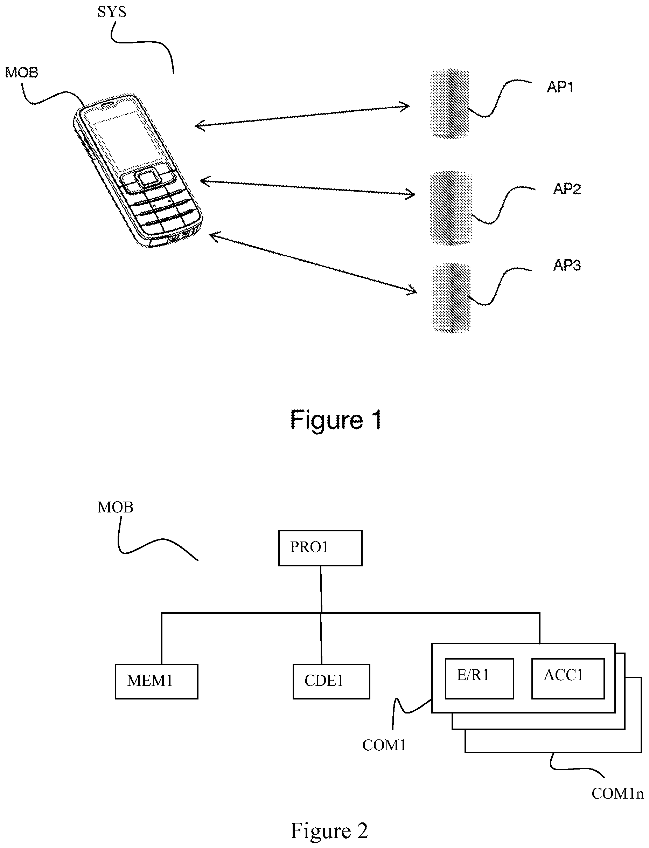

La figure 1 représente un système SYS comprenant un dispositif maître MOB et des dispositifs esclaves à savoir dans notre exemple des points d'accès Bluetooth AP1-AP3. Le dispositif maître est illustré au moyen d'un smartphone ; les points d'accès sont des enceintes Bluetooth.

Précisons qu'ici un dispositif maître est un dispositif qui requiert une communication avec un dispositif esclave. La communication peut avoir pour but l'utilisation d'un dispositif esclave en vue d'une utilisation du dispositif esclave dans un but précis tel qu'une restitution sonore, une restitution d'un contenu multimédia, etc. La communication peut aussi avoir pour but de récupérer des données sur un dispositif esclave ; par exemple si le dispositif esclave est un objet connecté ayant pour fonction de mesurer une température ambiante, le dispositif maître peut requérir auprès de ce dispositif l'obtention d'une température mesurée.

De façon connue en soi, en référence à la figure 2, le smartphone MOB a l'architecture matérielle d'un ordinateur. Il comporte au moins un processeur PRO1, au moins une mémoire morte MEM1, au moins une mémoire vive (non représentée), au moins un module de communication COM11 pour communiquer avec les enceintes. Ce module de communication comprend un sous-module d'émission/réception E/R1 pour émettre/recevoir des données ; et un sous-module d'accès ACC1 au réseau, Bluetooth dans notre exemple.

Le smartphone MOB comprend un module de commande CDE1 agencé pour envoyer des commandes vers un ou plusieurs dispositifs esclaves.

Le smartphone peut aussi comprendre d'autres modules de communication COMn pour la communication avec d'autres réseaux tels qu'un réseau cellulaire du type 4G/5G, un réseau WiFi, etc. Cependant, ces autres moyens de communication ne seront pas décrits davantage car sont optionnels et sans intérêt pour l'exposé de l'invention.

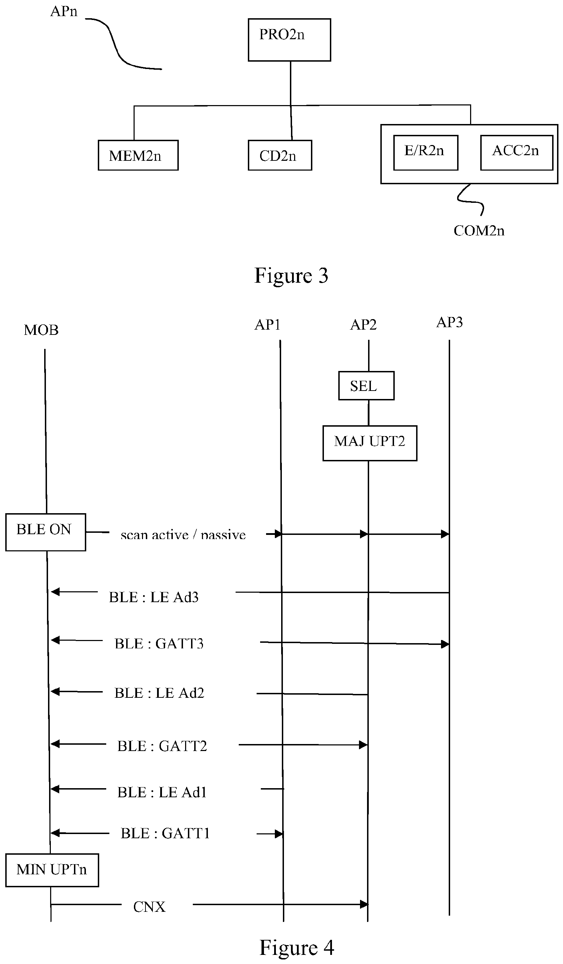

Dans la mémoire morte MEM1 est enregistré un programme d'ordinateur conforme à l'invention, ce programme comportant des instructions pour exécuter, au moins en partie, les étapes du procédé décrit en référence à la figure 4.

Les moyens de communication COM11 sont aptes à émettre et à recevoir des signaux radiofréquences. Par exemple, les moyens de communication sont aptes à communiquer au moyen du protocole Bluetooth et plus spécifiquement du protocole Bluetooth basse consommation BLE.

Rappelons ici que l'invention ne se limite pas au moyen de communication Bluetooth mais s'étend à d'autres moyens tels que le WiFi, les moyens de communication cellulaires de type 3G, etc.

Les enceintes ont aussi une architecture matérielle d'un ordinateur. Les enceintes APn incluent comme pour le smartphone, au moins un processeur PRO2n, au moins une mémoire morte MEM2n, au moins une mémoire vive (non représentée), au moins un module de communication COM2n pour communiquer avec le smartphone. Ce module de communication COM2n comprend un sous-module d'émission/réception pour émettre/recevoir des données ; et un sous-module d'accès au réseau, Bluetooth dans notre exemple.

Dans la mémoire morte MEM2n est enregistré un programme d'ordinateur conforme à l'invention, ce programme comportant des instructions pour exécuter, au moins en partie, les étapes du procédé décrit en référence à la figure 4.

Dans l'exemple de réalisation décrit ci-dessous, on fait l'hypothèse que les dispositifs esclaves sont sous tension, prêts à être utilisés.

Rappelons qu'un échange selon le protocole BLE se compose de 2 phases :
- la phase d'annonce (advertising) LE
- la phase de connexion (connecting) GATT

Comme on le verra ci-dessous, ces deux phases vont s'exécuter pour chaque enceinte.

Les étapes d'un mode de réalisation sont illustrées sur la figure 4.

Lors d'une première étape, l'utilisateur sélectionne SEL la deuxième enceinte AP2 en réinitialisant une donnée (ou paramètre) dite donnée de sélection (MAJ OPT2). On comprend ici que les autres données de sélection UPT1 et UPT3 relatives aux premier et troisième enceintes AP1 et AP3, respectivement, ne sont pas mises à jour.

La réinitialisation peut être réalisée de différentes manières, par exemple en pressant un bouton sur le smartphone. Le bouton peut être une touche physique d'un clavier physique, ou d'un clavier virtuel affiché sur une interface graphique. La pression du bouton provoque l'envoi d'une commande de réinitialisation d'un paramètre.

La sélection ne se limite bien évidemment pas à cet exemple, d'autres modes de sélection pouvant être mis en œuvre ; à titre d'exemple une sélection peut s'effectuer sans contact ; elle peut aussi s'effectuer via un réseau de communication. La réinitialisation peut aussi être réalisée vocalement.

La sélection est suivie d'une mise à jour MAJ de la donnée de sélection UPT2 sur le dispositif esclave AP2 sélectionné. Cette mise à jour sera utile par la suite pour le smartphone car le smartphone réalisera une comparaison des valeurs reçues depuis les enceintes AP1-AP3, respectivement, et choisira l'enceinte dont le paramètre UPT2 a été mis à jour.

Dans notre exemple, cette donnée de sélection est une donnée représentative d'une durée temporelle UPTn (n= 1,2,3), représentative d'une durée d'utilisation. Cette durée d'utilisation UPTn (n= 1,2,3) est obtenue par l'intermédiaire d'un compteur temporel présent sur les dispositifs esclaves. Une pression sur le bouton décrit ci-dessus réinitialise le compteur à zéro minute.

Nous verrons dans la suite que d'autres exemples de mise en œuvre sont possibles lors de la mise à jour du paramètre, le but étant de rendre cette valeur mise à jour distinctive par rapport aux autres valeurs des autres enceintes. Par exemple, la sélection peut fixer la valeur de la donnée de sélection à une valeur telle qu'il est fort probable qu'elle soit supérieure aux valeurs des paramètres des autres enceintes ; La valeur résultante, dite valeur distinctive, se distingue alors des autres valeurs reçues des autres dispositifs esclaves, permettant ainsi de sélectionner l'enceinte concernée. Selon une variante, cette valeur est de nouveau mise à jour suite à l'utilisation du dispositif esclave pour prendre une valeur « non distinctive » ; par exemple une fois la restitution du contenu sur l'enceinte terminée. En effet, sans nouvelle mise à jour, si une autre deuxième enceinte est sélectionnée par la suite, cela entraînerait la mise à jour de la donnée de sélection de cette deuxième enceinte à une valeur élevée, le smartphone recevrait alors deux valeurs distinctives, l'une de la première enceinte et l'autre de la deuxième, ce qui ne permettrait pas une connexion automatique avec une seule enceinte.

En prenant l'exemple des trois enceintes AP1-AP3 ; en considérant que les données temporels UPT1-UPT3 ont des valeurs respectives de 5min, 25min, 300min, avant appui sur le bouton ; que l'utilisateur réalise la sélection en pressant le bouton présent sur la deuxième enceinte AP2 ; la valeur de la donnée temporelle associée à la deuxième enceinte devient nulle ; et les données temporelles ont alors respectivement comme valeurs 15min, 0min, 300min.

Rappelons que « min » est le symbole de la minute temporelle.

Ensuite, lors d'une seconde étape (BLE ON), dans notre exemple, le module Bluetooth est activé sur le smartphone MOB.

A noter que le sens d'exécution des deux premières étapes est indifférent. Le module Bluetooth du smartphone peut être activé avant la mise à jour du paramètre.

Suite à l'activation, le smartphone MOB détecte les dispositifs esclaves AP1-AP3 avec lesquels une communication est possible. Dans le contexte du Bluetooth, la détection s'effectue en réalisant une écoute de fréquences. Cette écoute de fréquences est généralement connue sous le terme de « scan » et permet de détecter la présence de dispositifs périphériques, ici les enceintes.

Lors de l'écoute, le smartphone reçoit des messages d'annonce selon la première phase décrite ci-dessus ; ces messages proviennent des différents dispositifs esclaves APn (n=1 à 3). Dans notre exemple, les messages d'annone ont la forme suivante, conformément au protocole BLE :
*LE Advertising report (Name n, BLE MAC Address n, RSSI n)*
dans lequel
n = 1, 2, 3 désignant l'enceinte concernée.
« Name n » est le nom de l'enceinte APn ;
« BLE MAC Address n » est l'adresse à utiliser pour communiquer avec le dispositif APn concerné ;
« RSSIn » (sigle anglo-saxon de Received Signal Strength Indication) est une donnée représentative d'une puissance de signal reçu par l'enceinte permettant d'estimer une distance entre le smartphone MOB et l'enceinte concerné APn.

Suite à la réception de ce message, le smartphone MOB choisi une enceinte parmi les enceintes AP1-AP3. Dans notre exemple, dans le contexte du Bluetooth, ce choix s'effectue lors de la deuxième phase décrite ci-dessus, à savoir la phase de connexion GATT. Cette phase de connexion s'effectue pour chaque enceinte AP1-AP2 ; les phases résultantes sont référencées GATT1-GATT3 sur la figure 4, respectivement.

On rappelle ici que le profil GATT est organisé hiérarchiquement en sections, appelées services, qui regroupent des données appelées caractéristiques. Une caractéristique peut correspondre par exemple au niveau de batterie, au taux d'humidité, au taux de luminosité, au nombre de pas effectués par un utilisateur, etc. Une caractéristique est identifiée par un identifiant universel unique UUID (pour « Universally Unique Identifier »). Une telle demande RequestBLEProfile est par exemple un message de la couche protocolaire SOAP (pour « Simple Object Access Protocol ») dans un réseau UPnP. Le protocole SOAP permet dans un réseau UPnP d'invoquer des actions.

### Une demande BLE profile peut être écrite de la manière suivante :

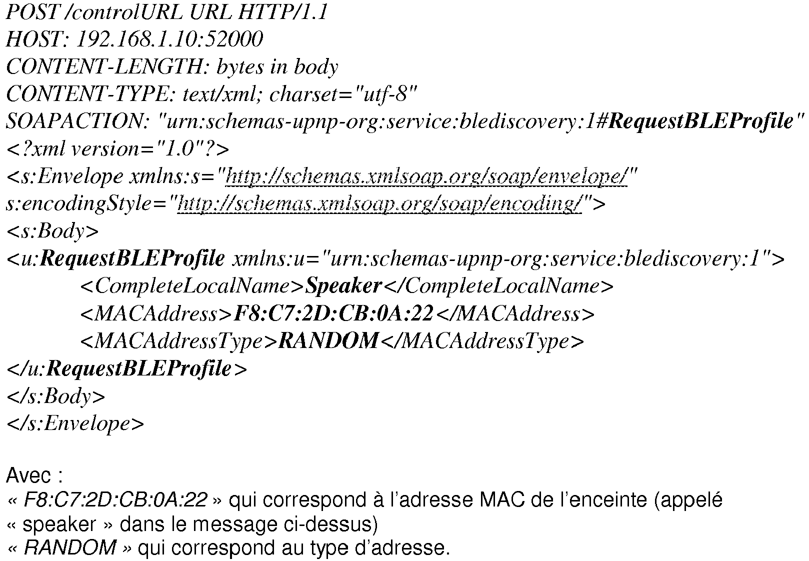

Lors de cette phase, en référence à la figure 4, les enceintes exposent des valeurs telles que le niveau de batterie, l'heure courante (Current Time). En référence au protocole BLE, le niveau de batterie est une caractéristique GATT du type « org.bluetooth.characteristic.battery_level » identifié de manière unique par un nombre (« AssignedNumber ») à savoir 0x2A19 ; et l'heure courante est une caractéristique GATT du type « org.bluetooth.characteristic.current_time » identifié de manière unique par un nombre à savoir 0x2A2B. Chaque caractéristique est encapsulée dans un « service ». Ainsi la caractéristique liée à la l'heure courante est écrite « org.bluetooth.characteristic.current_time » et fait partie du service qui s'écrit « org.bluetooth.service.current_time ». Ce dernier service peut être identifié de manière unique par le nombre 0x1805. Aussi, la caractéristique « org.bluetooth.characteristic.battery_level » fait partie du service « org.bluetooth.service.battery_service » identifié de manière unique par le nombre 0x180F.

Rappelons ici qu'en référence au protocole BLE, un dispositif esclave APn expose un paramètre appelé « AssignedNumber » ainsi qu'un paramètre « UUID » permettant au smartphone de récupérer la valeur de celle-ci grâce au protocole bluetooth ATT (« Attribute Protocol »).

Le type du paramètre lié à la durée d'utilisation UPTn (n=1,2,3) pourrait être écrit dans une nouvelle caractéristique GATT du type « org.bluetooth.characteristic.uptime » identifié de manière unique par exemple le nombre 0x2AFF et faisant par exemple partie du service « org.bluetooth.service.uptime » identifié de manière unique par le nombre 0x18FF.

### Exemple de message de réponse d'une enceinte lors de la phase GATT:

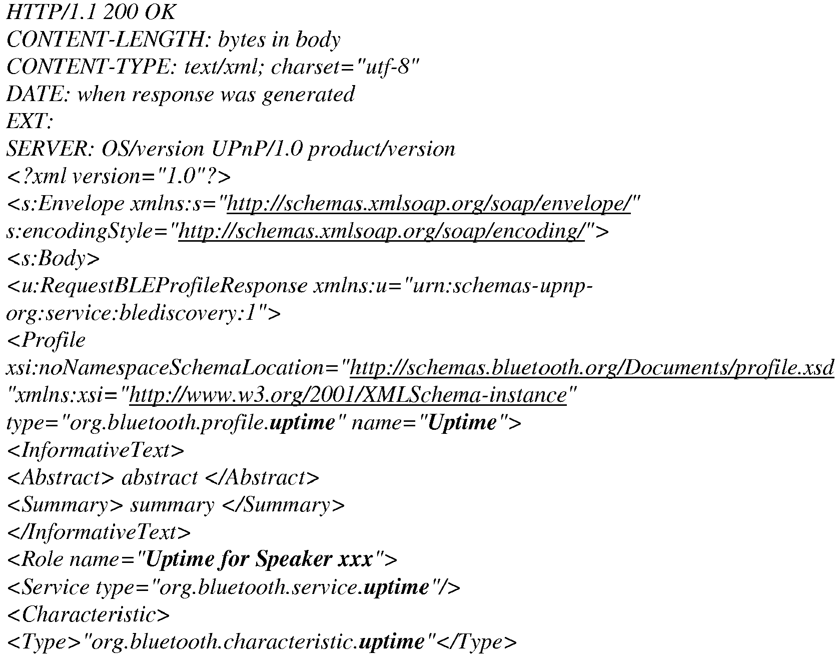

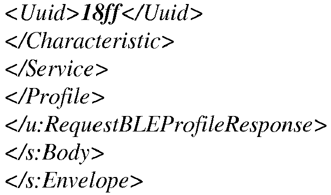

Dans notre exemple, le smartphone reçoit trois messages de ce type lors de phases GATT1-GATT3 respectives, et récupère pour chaque message la valeur des données temporelles désignée par le paramètre « uptime » qui correspond à la référence UPT à savoir par exemple 16min, 0.3min, 301min.

A noter que la donnée temporelle correspond à une durée ayant un instant de départ et un instant de fin ; le choix des instants peut varier selon les cas d'usage. Dans notre exemple, l'instant de départ correspond à l'instant de la sélection (sous-entendu la réinitialisation) et l'instant de fin correspond approximativement à l'instant d'émission du message par l'enceinte. D'autres instants de départ et de fin peuvent bien évidemment être choisis ; les instants choisis sont, de préférence, les mêmes pour chaque enceinte. Dans cette configuration, 0.3mn signifie qu'une durée de 0.3 minute s'est écoulé entre la réinitialisation et l'émission du message à destination du smartphone.

Aussi, dans notre exemple, en respectant les instants de départ et de fin précédents, la durée « 16 min » signifie que la première enceinte AP1 a été utilisée 16minutes depuis sa dernière réinitialisation (par appui sur le bouton ou sa mise sous tension) ; et la durée « 301 min » signifie que la troisième enceinte AP3 a été utilisée 301 minutes depuis sa dernière réinitialisation (par appui sur le bouton ou sa mise sous tension) ;

Suite à la réinitialisation, la valeur de la donnée temporelle UPT2 peut une valeur nulle (UPT2=0 min). Selon une variante, après réinitialisation, la valeur de la donnée temporelle peut être maintenue à zéro (UPT2=0) pendant une plage temporelle donnée par exemple pendant 10s à compter de la réinitialisation. Cela permet au smartphone d'éviter l'utilisation d'une plage temporelle telle que décrite ci-dessus; une valeur à zéro étant suffisante rendre cette valeur distinctive par rapport aux autres valeurs reçues. Le smartphone détecte cette valeur distinctive et choisi l'enceinte concernée.

Une fois les données temporelles UPT1-UPT3 récupérées, dans notre exemple, le smartphone détermine par comparaison la valeur la plus faible parmi les valeurs reçues (MIN (UPTn), n= 1,2,3).

MIN désigne, dans le présent texte, un opérateur mathématique apte à sélectionner une valeur minimale (voir plusieurs valeurs minimales) dans un ensemble de valeurs donné.

Dans notre exemple, MIN (16min, 0.3min, 301min) = 0.3 min ; la valeur la plus faible est donc celle qui correspond à la deuxième enceinte à savoir 0.3min. Dans le cas où la valeur mise à jour est maintenue à 0 min, le dispositif identifie donnée temporelle dont la valeur est nulle.

Le choix de l'enceinte peut aussi être réalisé d'une autre façon. Par exemple, le smartphone MOB considère une plage temporelle donnée comme par exemple [0min,0.3min] et choisi l'enceinte ayant retourné une valeur inclut dans cette plage.

Une fois déterminée, le smartphone se connecte CNX à la deuxième enceinte AP2 automatiquement et peut l'utiliser ou non pour restituer un son.

En complément des variantes déjà décrites ci-dessus, le mode de réalisation décrit ci-dessus peut faire l'objet d'autres variantes.

Selon une première variante, la sélection de l'enceinte peut se faire autrement que par l'appui sur un bouton ; une mise sous tension électrique de l'enceinte peut déclencher une réinitialisation du compteur.

Selon une deuxième variante, un utilisateur peut souhaiter restituer un son sur plusieurs dispositifs esclaves. Dans cette configuration, le procédé peut s'effectuer de plusieurs façons dont les suivantes.

Selon une première façon, le procédé décrit ci-dessus peut être exécuté un nombre de fois égal au nombre de dispositifs esclaves à sélectionner.

Selon une deuxième façon, lors de la première étape, plusieurs dispositifs esclaves sont sélectionnés. On considère par exemple que la première et la deuxième enceinte ont été sélectionnées en pressant le bouton décrit ci-dessus. Les données de sélection sont mises à jour sur ces dispositifs. Dans l'exemple de réalisation dans lequel le paramètre est une durée temporelle UPT, les durées respectives sont réinitialisées. Le smartphone reçoit alors plusieurs messages de réponse dont deux qui incluent des durées UPT1 et UPT3 mises à jour. Suite à la réception, le smartphone MOB récupère la valeur des données temporelles des dispositifs esclaves ; ces valeurs sont par exemple,: (0.4min, 0.3min, 301min), respectivement ; la sélection du premier et du deuxième dispositif ayant été réalisée à des instants différents, en l'espèce le deuxième dispositif esclave a été sélectionné après le premier dispositif esclave. Comme on l'a vu précédemment, les durées 0.4min et 0.3min correspondent à des exemples de durées écoulées entre l'instant de sélection des dispositifs esclaves et l'instant d'émission des messages respectifs par le smartphone MOB.

Dans le cas où la valeur des données temporelles est maintenue à zéro pendant une plage temporelle, comme décrit ci-dessus, le smartphone se connecte aux dispositifs esclaves ayant une valeur nulle. Il n'y a pas lieu ici d'utiliser une plage temporelle.

Une fois les compteurs récupérés, le smartphone MOB détermine par comparaison la valeur des données temporelles les plus faibles parmi les valeurs de données temporelles reçues ;
- pour cela, le smartphone considère une plage temporelle donnée comme par exemple [0min,2min] et choisi tout ou partie des dispositifs esclaves ayant retournés une valeur incluse dans cette plage ;
- ou, le nombre de dispositifs esclaves à considérer peut être renseigné au niveau du smartphone ; par exemple, un utilisateur sélectionne le nombre de dispositifs esclaves à utiliser, deux dans notre exemple. dans cette configuration, le smartphone choisi les dispositifs esclaves ayant les deux durées les plus petites.

Une fois déterminée, lors d'une dernière étape CNX, le smartphone se connecte à la première et à la deuxième enceinte et les utilise pour restituer un son.

Précisons ici que le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de connexion d'un dispositif (MOB), dit dispositif maître, avec un dispositif esclave choisi parmi plusieurs dispositifs esclaves (AP1-AP3), le procédé comprenant, dans le dispositif maître,
a. une étape de réception de messages d'annonce (LE) issus de plusieurs dispositifs esclaves (AP1-AP2), les messages incluant des données temporelles respectives (UPT1-UPT3) fournies par des compteurs temporels respectifs (CPT1-CPT3) aptes à comptabiliser des durées d'utilisation respectives (UPT1-UPT3) des dispositifs esclaves,
b. une étape de comparaison des données temporelles reçues (UPT1-UPT3) ;
c. une étape de connexion avec au moins un dispositif esclave en fonction du résultat de l'étape de comparaison ;

2. Procédé selon la revendication 1, dans lequel si l'étape de connexion concerne un seul dispositif esclave, la connexion s'effectue avec le dispositif esclave dont la donnée temporelle (UPT2) reçue est la plus petite.

3. Procédé selon la revendication 1, dans lequel si l'étape de connexion concerne plusieurs dispositifs esclaves, la connexion s'effectue avec les dispositifs esclaves dont les données temporelles (UPT1,UPT2) sont incluses dans une plage temporelle donnée ([0min,1 min]).

4. Procédé selon la revendication 1, dans lequel si l'étape de connexion concerne plusieurs dispositifs esclaves, et si un nombre de connexions est préalablement défini, la connexion s'effectue avec un nombre de dispositifs esclaves égal au nombre défini et ayant les plus petites données temporelles (UPT1,UPT2).

5. Procédé selon la revendication 1, dans lequel une réinitialisation entraîne une mise à zéro de la donnée temporelle, et dans lequel la valeur de la donnée temporelle résultant de la réinitialisation est maintenue à la même valeur pendant une durée prédéfinie.

6. Procédé de connexion d'un dispositif, dit dispositif esclave, apte à communiquer avec un autre dispositif, dit dispositif maître, comprenant, dans un dispositif esclave,
a. une étape de sélection du dispositif esclave en modifiant une donnée temporelle (UPT2) fournie par un compteur temporel (CPT2) apte à comptabiliser une durée d'utilisation (UPT2) du dispositif esclave;
b. une étape de transmission de la donnée temporelle modifiée au dispositif maître ; suivi d'
c. une étape de connexion avec le dispositif maître.

7. Procédé selon la revendication 6, dans lequel la modification correspond à une réinitialisation de la donnée temporelle.

8. Dispositif (MOB), dit dispositif maître, apte à communiquer avec un autre dispositif, dit dispositif esclave, choisi parmi plusieurs dispositifs esclaves (AP1-AP3), comprenant
a. un module de réception agencé pour recevoir des messages d'annonce (LE) issus de plusieurs dispositifs esclaves (AP1-AP2), les messages incluant des données temporelles respectives (UPT1-UPT3) aptes à comptabiliser des durées d'utilisation respectives (UPT1-UPT3) des dispositifs esclaves;
b. un module de comparaison agencé pour comparer les données temporelles reçues (UPT1-UPT3) ;
c. un module de connexion agencé pour connecter le dispositif maître à au moins un dispositif esclave en fonction du résultat de l'étape de comparaison.

9. Dispositif (AP1-AP3), dit dispositif esclave, apte à communiquer avec un autre dispositif, dit dispositif maître, comprenant :
a. un module de sélection agencé pour sélectionner le dispositif esclave en modifiant une donnée temporelle fournie par un compteur temporel (CPT2) apte à comptabiliser une durée d'utilisation (UPT2) du dispositif esclave ;
b. un module de transmission agencé pour transmettre la donnée temporelle modifiée au dispositif maître ;
c. un module de connexion agencé pour connecter le dispositif esclave avec le dispositif maître suite à la transmission.

10. programme d'ordinateur apte à être mis en œuvre sur un dispositif tel que défini dans la revendication 8, le programme comprenant des instructions de code qui, lorsqu'il est exécuté par un processeur, réalise les étapes du procédé définies dans la revendication 1.

11. Programme d'ordinateur apte à être mis en œuvre sur un dispositif tel que défini dans la revendication 9, le programme comprenant des instructions de code qui, lorsqu'il est exécuté par un processeur, réalise les étapes du procédé définies dans la revendication 6.

12. Support de données sur lequel a été mémorisé un programme tel que défini dans la revendication 10.

13. Support de données sur lequel a été mémorisé un programme tel que défini dans la revendication 11.

## Patentansprüche

1. Verfahren zur Verbindung einer Vorrichtung (MOB), der Master-Vorrichtung, mit einer Slave-Vorrichtung, die aus mehreren Slave-Vorrichtungen (AP1 - AP3) ausgesucht wird, das Verfahren umfassend, in der Master-Vorrichtung,
a. einen Schritt des Empfangens von Ankündigungsnachrichten (LE), die von mehreren Slave-Vorrichtungen (AP1-AP2) stammen, wobei die Nachrichten jeweilige Zeitangaben (UPT1 - UPT3) enthalten, die von jeweiligen Zeitzählern (CPT1 - CPT3) bereitgestellt werden, die geeignet sind, jeweilige Nutzungsdauern (UPT1 - UPT3) der Slave-Vorrichtungen zu erfassen,
b. einen Schritt des Vergleichens der empfangenen Zeitangaben (UPT1-UPT3);
c. einen Schritt des Verbindens mit mindestens einer Slave-Vorrichtung in Abhängigkeit von dem Ergebnis des Schritts des Vergleichens;

2. Verfahren nach Anspruch 1, wobei, wenn der Schritt des Verbindens eine einzelne Slave-Vorrichtung betrifft, die Verbindung mit der Slave-Vorrichtung erfolgt, deren empfangene Zeitangabe (UPT2) die kleinste ist.

3. Verfahren nach Anspruch 1, wobei, wenn der Schritt des Verbindens mehrere Slave-Vorrichtungen betrifft, die Verbindung mit den Slave-Vorrichtungen erfolgt, deren Zeitangaben (UPT1, UPT2) in einem bestimmten Zeitbereich ([0min, 1min]) enthalten sind.

4. Verfahren nach Anspruch 1, wobei, wenn der Schritt des Verbindens mehrere Slave-Vorrichtungen betrifft, und wenn eine Anzahl von Verbindungen zuvor definiert ist, die Verbindung mit einer Anzahl von Slave-Vorrichtungen erfolgt, die gleich der definierten Anzahl ist und die kleinsten Zeitangaben (UPT1, UPT2) aufweist.

5. Verfahren nach Anspruch 1, wobei ein Zurücksetzen ein Setzen auf null der Zeitangabe bewirkt, und wobei der Wert der Zeitangabe, der aus dem Zurücksetzen hervorgeht, während einer vorgegebenen Dauer auf demselben Wert gehalten wird.

6. Verfahren zur Verbindung einer Vorrichtung, der Slave-Vorrichtung, die geeignet ist, mit einer anderen Vorrichtung, der Master-Vorrichtung, zu kommunizieren, umfassend, in einer Slave-Vorrichtung,
a. einen Schritt des Auswählens der Slave-Vorrichtung durch Verändern einer Zeitangabe (UPT2), die von einem Zeitzähler (CPT2) bereitgestellt wird, der geeignet ist, eine Nutzungsdauer (UPT2) der Slave-Vorrichtung zu erfassen;
b. einen Schritt des Übertragens der veränderten Zeitangabe an die Master-Vorrichtung; gefolgt von
c. einem Schritt des Verbindens mit der Master-Vorrichtung.

7. Verfahren nach Anspruch 6, wobei das Verändern einem Zurücksetzen der Zeitangabe entspricht.

8. Vorrichtung (MOB), die Master-Vorrichtung, die geeignet ist, mit einer anderen Vorrichtung, der Slave-Vorrichtung, zu kommunizieren, die aus mehreren Slave-Vorrichtungen (AP1 - AP3) ausgesucht ist, umfassend
a. ein Empfangsmodul, das angeordnet ist, Ankündigungsnachrichten (LE) zu empfangen, die von mehreren Slave-Vorrichtungen (AP1-AP2) stammen, wobei die Nachrichten jeweilige Zeitangaben (UPT1 - UP3) enthalten, die geeignet sind, jeweilige Nutzungsdauern (UPT1 - UPT3) der Slave-Vorrichtungen zu erfassen;
b. ein Vergleichsmodul, das angeordnet ist, der empfangenen Zeitangaben (UPT1-UPT3) zu vergleichen;
c. ein Verbindungsmodul, das angeordnet ist, die Master-Vorrichtung in Abhängigkeit von dem Ergebnis des Schritts des Vergleichens mit mindestens einer Slave-Vorrichtung zu verbinden.

9. Vorrichtung (AP1 - AP3), die Slave-Vorrichtung, die geeignet ist, mit einer anderen Vorrichtung, der Master-Vorrichtung, zu kommunizieren, umfassend:
a. ein Auswahlmodul, das angeordnet ist, die Slave-Vorrichtung durch Verändern einer Zeitangabe auszuwählen, die von einem Zeitzähler (CPT2) bereitgestellt wird, der geeignet ist, eine Nutzungsdauer (UPT2) der Slave-Vorrichtung zu erfassen;
b. ein Übertragungsmodul, das angeordnet ist, die veränderte Zeitangabe an die Master-Vorrichtung zu übertragen;
c. ein Verbindungsmodul, das angeordnet ist, die Slave-Vorrichtung im Anschluss an die Übertragung mit der Master-Vorrichtung zu verbinden.

10. Computerprogramm, das geeignet ist, auf einer Vorrichtung nach Anspruch 8 eingesetzt zu werden, das Programm umfassend Code-Anweisungen, die, wenn es von einem Prozessor ausgeführt wird, die Schritte des Verfahren nach Anspruch 1 durchführt.

11. Computerprogramm, das geeignet ist, auf einer Vorrichtung nach Anspruch 9 eingesetzt zu werden, das Programm umfassend Code-Anweisungen, die, wenn es von einem Prozessor ausgeführt wird, die Schritte des Verfahren nach Anspruch 6 durchführt.

12. Datenträger, auf dem ein Programm nach Anspruch 10 gespeichert wurde.

13. Datenträger, auf dem ein Programm nach Anspruch 11 gespeichert wurde.

## Claims

1. Method for connecting a device (MOB), termed master device, with a slave device chosen from among several slave devices (AP1-AP3), the method comprising, in the master device,
a. a step of receiving advertising messages (LE) arising from several slave devices (AP1-AP2), the messages including respective temporal data (UPT1-UPT3) provided by respective temporal counters (CPT1-CPT3) able to recognize respective durations of use (UPT1-UPT3) of the slave devices
b. a step of comparing the temporal data received (UPT1-UPT3);
c. a step of connecting with at least one slave device as a function of the result of the comparing step;

2. Method according to Claim 1, in which if the connecting step relates to a single slave device, the connection is performed with the slave device whose received temporal datum (UPT2) is the smallest.

3. Method according to Claim 1, in which if the connecting step relates to several slave devices, the connection is performed with the slave devices whose temporal data (UPT1,UPT2) are included in a given temporal range ([0min,1min]).

4. Method according to Claim 2, in which if the connecting step relates to several slave devices, and if a number of connections is previously defined, the connection is performed with a number of slave devices equal to the defined number and having the smallest temporal data (UPT1,UPT2).

5. Method according to Claim 1, in which a reinitialization brings about a setting to zero of the temporal datum, and in which the value of the temporal datum resulting from the reinitialization is held at the same value for a predefined duration.

6. Method for connecting a device, termed slave device, able to communicate with another device, termed master device, comprising, in a slave device,
a. a step of selecting the slave device by modifying a temporal datum (UPT2) provided by a temporal counter (CPT2) able to reckon a duration of use (UPT2) of the slave device;
b. a step of transmitting the modified temporal datum to the master device; followed by
c. a step of connecting with the master device.

7. Method according to Claim 6, in which the modification corresponds to a reinitialization of the temporal datum.

8. Device (MOB), termed master device, able to communicate with another device, termed slave device, chosen from among several slave devices (AP1-AP3), comprising
a. a reception module designed to receive advertising messages (LE) arising from several slave devices (AP1-AP2), the messages including respective temporal data (UPT1-UPT3), able to recognize respective durations of use (UPT1 - UPT3) of the slave devices;
b. a comparison module designed to compare the temporal data received (UPT1-UPT3);
c. a connection module designed to connect the master device to at least one slave device as a function of the result of the comparing step.

9. Device (AP1-AP3), termed slave device, able to communicate with another device, termed master device, comprising:
a. a selection module designed to select the slave device by modifying a temporal datum provided by a temporal counter (CPT2) able to recognize a duration of use (UPT2) of the slave device;
b. a transmission module designed to transmit the modified temporal datum to the master device;
c. a connection module designed to connect the slave device with the master device following transmission.

10. Computer program able to be implemented on a device such as defined in Claim 8, the program comprising code instructions which, when it is executed by a processor, carries out the method steps defined in Claim 1.

11. Computer program able to be implemented on a device such as defined in Claim 9, the program comprising code instructions which, when it is executed by a processor, carries out the method steps defined in Claim 7.

12. Data medium on which a program such as defined in Claim 10 has been stored.

13. Data medium on which a program such as defined in Claim 11 has been stored.
